**Europäisches Patentamt**

**European Patent Office**

**Office européen des brevets**

(19)

(11) Veröffentlichungsnummer: **0 114 394**
**B1**

(12) # EUROPÄISCHE PATENTSCHRIFT

(45) Veröffentlichungstag der Patentschrift:
25.01.89

(51) Int. Cl.⁴: **C 08 F 30/02**

(21) Anmeldenummer: 83113059.6

(22) Anmeldetag: 23.12.83

(54) Verfahren zur Herstellung von Polymerisaten der Vinylphosphonsäure in protischen Lösungsmitteln.

(30) Priorität: 29.12.82 DE 3248491

(43) Veröffentlichungstag der Anmeldung:
01.08.84 Patentblatt 84/31

(45) Bekanntmachung des Hinweises auf die Patenterteilung:
25.01.89 Patentblatt 89/4

(84) Benannte Vertragsstaaten:
DE FR GB IT

(56) Entgegenhaltungen:
DE-A-1 106 963
DE-A-1 135 176

(73) Patentinhaber: HOECHST AKTIENGESELLSCHAFT,
Postfach 80 03 20, D-6230 Frankfurt am Main 80
(DE)

(72) Erfinder: Dürsch, Walter, Dr., In der Braubach 4,
D-6240 Königstein/Taunus (DE)
Erfinder: Herwig, Walter, Dr., Hasenpfad 7, D-6232
Bad Soden am Taunus (DE)
Erfinder: Engelhardt, Friedrich, Dr., Hünfelder
Strasse 20, D-6000 Frankfurt am Main 61 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Polyvinylphosphonsäure ist z. B. für Korrosionpschutz, Flanmfestausrüstungen, Druckplattenherstellungen und als Wasch- und Reinigungsmittelzusatz von großem praktischen Interesse.

Polyvinylphosphonsäure wurde bisher gemäß den Beispielen 7 und 8 der DE-PS 1 106 963 unter Zuhilfenshme von aprotischen Lösungsmitteln, bevorzugt Ethylscetat, hergestellt. Sie fällt dabei als Niederachlsg aa und muß z. B. von Ethylacctat und Verunreinigungen abgetrcnnt werden. Die so hergestellte Polyvinylphosphonsäure enthält immer noch ca. 10 % an freier Vinylphosphonsäure. Deim Absaugen sind Sicherhcitsmaßnshmen notwendig und es treten Lösungsmittelverluste auf. Polyvinylphosphonsäure; die z. T. allerdings durch Nebenprodukte erheblich vcrunreinigt ist, entstcht auch, wenn Vinylphosphonsäure gemäß dcn Beispielen 1 bzw. 6 der gleichcn Patentschrift bei Abwesenheit von Lösungsmitteln polymerisiert wird. Diese Arbeitsweise führt zunächst zu sehr hochviskosen, schwer bewegbaren und schließlith zu festen Reaktionsprodukten, die nicht mchr gerührt bzw. geknetet werden können. Sie ist daher praktisch nicht durchführbar.

Es wurde daher ein Herstellungsverfahren für Plyvvinylphosphonsäure gesucht, bei dem
1. ein Absaugen unterbleiben kann,
2. ständig gerührt werden kann, 3. am Ende nur noch geringe Restmonomercngehalte vorliegen,
4. dic Reaktionsprodukte direkt z. B. mit Wasser weiterverdünnt werden können und
5. in Wßser bzw. anderen protischen, wossermischbaren Verdünnungsmitteln gearbeitet werden kann.

Aus den Beispielen 3, 4 und 5 der DE-PS 1 106 963 geht hervor, daß die Polymerisation von Vinylphosphonsäure in relstiv großen Mengen an protischen Lösungsmitteln (50 % Isopropanol bzw. 100 % Wasser),

unter Anwendung relativ kurzer Polymerisationszeiten von nur 5 bzw. 6 Std. und in Gegenwart von nur 0,5 % an Radikalstartern (Di-benzoylperoxid bzw. Kalium-persulfat), die zu Beginn zugefügt werden, durchgeführt werden kann.

Es wird dabei aufgrund einer gewissen Viskositätserhöhung der erhaltenen Reaktionslösungen angenommen, daß auch unter diesen Bedingungen Lösungen von Polyvinylphosphonsäuren entstehen. Konkrete Angaben über die Ausbeute an Polyvinylphosphonsäure bzw. über den Restmonomerengehalt werden nicht gemacht. Dies kann nicht überraschen, da die $P^{31}$-NMR-Spek-troskopie, die heute eine eindeutige Bestimmung von nicht polymerisierter monomerer Vinylphosphonsäure neben Polyvinylphosphonsäure erlaubt, damals noch nicht zur Verfügung stand.

Die Nacharbeitungen der Beispiele 3, 4 und 5 der genannten Patentschrift und sich anschließende P-NMRspektroskopische Untersuchungen der Reaktionslösungen ergeben, daß die Ausbcuten an Polyvinylphosphonsäure unter den in diesen Beispielen geoffenbarten Versuchsbedingungen tatsächlich bei nur ca. 35 - 40 %, bzw. ca. 6 - 10 %, bezogen auf die eingesetzte Vinylphosphonsäure liegen. An keiner Stelle des Patents finden sich Hinweise suf andere Polymerisationsbedingungen, die in protischen Verdünnungsmitteln zu höheren Anteilen an Polyvinylphosphonsäure führen könnten.

In einer von den Autoren der DE-PS 1 106 96 verfaßten Veröffentlichung (Angew. Chemie 1962, S. 974) wird ebenfalls allgemein ohne Einschränkung behsuptet, Vinylphosphonsäure sei eine polymerisationsfreudige Verbindung und sei leicht zur Homopolymerisstion anzuregen. Aufgrund dieser Vorveröffentlichungen mußte für den Fachmann der Eindruck entstehen, daß Vinylphosphonsäure anslog wie in aprotischen auch in protischen Verdünnungsmitteln unter relativ wenig energischen und spezifischen Bedingungen in guten Ausbeuten polymerisiert werden kann.

Es wurde nun, entgegen den niederen geoffenbarten Ausbeuten an Polyvinylphosphonsäure und entgegen dem vorhandenen Vorurteil überraschenderweise ein Verfahren zur Herstellung von Polyvinylphosphonsäure in protischen Verdünnungsmitteln gefunden, bei dem weniger als 35 %, bevorzugt weniger als 20 %, an restlicher monomerer Vinylphosphonsäure resultieren. Es ist dadurch gekennzeichnet, daß man Vinylphosphonsäure in insgesamt 10 bis 150 Gew.-% an protischen Verdünnungsmitteln insgesamt 4 bis 60 Stunden auf Temperaturen von 40° bis 130°C erhitzt in Gegenwart von 1,0 bis 5,5 Gew.-% an solchen aliphatischen Peroxiestern und/oder Daicylperoxiden die bei Temperaturen unter 122°C in einer Stunde zur Hälfte zerfallen.

Die monomere Vinylphosphonsäure ist heute in technischem Maßstab auf zwei verschiedencn Wegen zugänglich.

1. Aufwendiges Verfahren (zur Herstellung reiner Vinylphosphonsäure). Aus Phosphortrichlchlorid und Ethylenoxid wird Tris-(2-chlorethyl)-phosphit hergestellt, daraus entsteht durch Arbusov-Umlagerung u.a. der 2-Chlorethanphos-phonsäure-bis(2-chlorethyl-ester). Nach Phosgenierung und thermischer Chlorwasserstoff-Abspaltung resultiert Vinylphosphonsäurc-dichlorid, das, nach, destillativer Reinigung, mit Wasser zu reiner Vinylphosphonsäure hydrolysiert wird.

Dieses Verfahren ist relativ aufwendig und wenig umweltfreundlich. Es müssen zunächst durch Phosgenierung Chloratome eingeführt werden, die später in Form von Chlorwasserstoff wieder entfernh werden müssen.

2. Umweltfreundliches halogenfreies Verfahren (zur Herstellung von "roher Vinylphosphonsäure" bzw. "esterhaltiger roher Vinylphosphonsäure").

Der durch Umsetzung von Dimethylphosphit und Vinylscetat in über 90 %-iger Ausbeute entstehende 2-Acetoxiethanphosphonsäuredimethylester wird gemäß DE-OS 3 001 894 bei 180 - 200°C zu einem noch Methylgruppen enthaltenden "Pyrolysat", das u. a. auch verschiedene Pyro-vinylphosphonsäurederivate umfaßt, pyrolysiert. Daraus resultiert gemäß DE-OS 3 110 975 durch mehrstündige Einwirkung von Wasser bei Temperaturen über 100°C eine preisgünstige "rohe Vinylphosphonsäure", die gemäß $P^{31}$-NMR-Spektrogramm wie folgt zusammengesetzt ist: ("%" bedeutet hierbei Prozente bezogen jeweils nur die Gesamtfläche aller $P^{31}$-Resonanz-Signale)

$$CH_2=CH-\overset{\overset{O}{\|}}{P}(-OH)_2 \qquad 70 - 77\ \%$$

$$CH_2=CH-\underset{OH}{\overset{\overset{O}{\|}}{P}}-O-C_2H_4-\overset{\overset{O}{\|}}{P}(-OH)_2 \qquad 2 - 7\ \%$$

$$HOC_2H_4-\overset{\overset{O}{\|}}{P}(-OH)_2 \qquad 1 - 6\ \%$$

$$CH_3OC_2H_4-\overset{\overset{O}{\|}}{P}(OH)_2 \qquad 2 - 4\ \%$$

$$H_3PO_4 \qquad 6 - 10\ \%$$

Sonstige P-Verbindungen $\qquad 3 - 10\ \%$

Wegen ihrer besonderen rreisgünstigkeit ist die durch Zugabe von mindestens 2 % Wasser zu dem "Pyrolysat" bei Temperaturen unter 100°C entstehende "esterhaltige rohe Vinylposphonsäure" von besonderem praktischen Interesse.

Sie hat gemäß $P^{31}$-NMR-Spektrogramm folgende Zusammensetzung (in % vom Gesamt-P): (Hierbei bedeutet R Wasserstoff oder Methyl)

$$CH_2=CH-\overset{\overset{O}{\|}}{P}(-OH)_2 \qquad 28 - 40\ \%$$

$$CH_2=CH-\underset{OH}{\overset{\overset{O}{\|}}{P}}-OCH_3 \qquad 20 - 30\ \%$$

$$CH_2=CH-\overset{\overset{O}{\|}}{P}(-OCH_3)_2 \qquad 2 - 6\ \%$$

$$CH_2=CH-\underset{OH}{\overset{\overset{O}{\|}}{P}}-O-C_2H_4-\underset{OH}{\overset{\overset{O}{\|}}{P}}-OR \qquad 5 - 7\ \%$$

$$RO-C_2H_4-\overset{\overset{\displaystyle O}{\|}}{\underset{\underset{\displaystyle OH}{|}}{P}}-OR \qquad 11 - 14 \ \%$$

$$RO-\overset{\overset{\displaystyle O}{\|}}{P}-(OH)_2 \qquad 7 - 10 \ \%$$

Sonstige P-Verbindungen          0 - 10 %

Für das erfindungsgemäße Vorfahren sind sowohl die reine, als auch die nach dem umweltfreundlichcn 2. Verfahren zugängliche "rohe" und die "esterhaltige rohe Vinylphosphonsäure" geeignet. Wird letztere verwendet, so entstehen Polyvinylphosphonsäuren, die z. T. noch Methylgruppen tragen.

Radikalische Polymerisationen verlaufen im allgemeinen umso besser, je reiner die Monomeren sind. Es war daher besonders überraschend, daB auch die "rohe" bzw. die "esterhaltige rohe Vinylphosphonsäure" unter den erfindungsgemäßen Bedingungen polymerisiert werden kann, obwohl sie bereits 20 - 30 % an Verunreinigungen in Form verschiedener vinylgruppenfreier P-haltiger Säuren enthalten. Neben den sauren Verbindungen mit freien Säuregruppen können auch Natrium-, Kalium-, Ammonium- und auch Aminsalze verwendet werden.

Die protischen Verdünnungsmittel sind notwendig, damit die Reaktionsgemische rührbar und verarbeitbar bleiben. Als protische Verdünnungsmittel kommen in Frage:

Wasser, einwertige aliphatische Alkohole mit 1 - 8, bevorzugt 1 - 4 Kohlenstoffatomen, sowie die wasserverdünnbaren und flüssigen Oxethylate von einwertigen Alkoholen bzw. von sekundären Aminen, soweit sie selbst tertiäre Amine darstellen.

Ein in allen Fällen wegen des niedrigen Preiscs und der günstigen Handhabbarkeit besonders bevorzugtes Verdünnungsmittel ist Wasser. Als bevorzugt geeignete Verdünnungsmittel können such die nach dem umweltfreundlichen 2. Herstellungsverfahren für Vinylphosphonsäure zwangsläufig anfallenden vinylgruppenfreien phosphorhaltigen sauren Substanzen betrachtet werden, die in der "rohen" bzw. in der "esterhaltigen rohen Vinylphosphonsäure" vorliegen. Sie vermögen andere phosphorfreie Verdünnungsmittel, wie z. B. Wasser, teilweise bzw. vollständig zu ersetzen. Es sind allgemein such Gemische der verschiedenen Ceeigneten Verdünnunsmittel, bevorzugt Gemische mit Wasser, einsetzbar.

Die Gesamtmengen an Verdünngsmitteln während der Polymerisation liegen bei 10 - 150 %, bevorzugt 20 - 80 %, bezogen auf die Gesamtmenge sn polymerisierbaren Vinylphosphonsäurederivaten.

Je mehr Verdünnungsmittel, vor allem schon zu Beginn, Vorhanden ist, umso mehr Katalysator und umso längere Reaktionszeiten sind notwendig. Nach der Durchführung der Polymerisation können, z. B. zum Einstellen einer bestimmten Viskosität, noch beliebig weitere Mengen an Verdünnungsmitteln zugefügt werden.

Es ist möglich, schon zu Beginn der Polymerisation soviel an Verdünnungsmitteln zuzugeben, daß das Reaktionsgemisch, zumindest bei den erhöhten Renktionstemperaturen, auch am Ende der Polymerisation noch rührbar bleibt, wenn die dabei notwendigen größeren Katalysatormengen in Kauf genommen werden.

Will man bevorzugt mit möglichst wenig Katalysator auskommen, so empfiehlt es sich, zu Beginn hein oder nur 5 - 30 % an Verdünnungsmittel zuzugeben und jnsgesamt weitere 5 - 145 %, beyorzugt 15 - 75 %, kontonuierlich oder in etwa gleichen Portionen in dem Maße zuzufügen, in dem die Polymerisation fortschreitet und eine zu hohe Viskosität dies erforderlich macht.

Entgegen dcn in den Beispielen 3, 4 und 5 der DE-PS 1 106 963 gemachten Angaben empfiehlt es sich, die Reaktionsgemische bei der Verwendung protischer Verdünnungsmittel mit Inertgas zu überlagern. Unterbleibt die Inertgasüberlagerung, so entstehen zwar ebenfalls Polymere. Es resultieren jedoch dann relativ etwas höhere Restmonomerengehalte und es treten Verfärbungen auf.

An radikalisch wirkenden Katalysatoren sind entgegen den Angaben der DE-PS 1 106 963 nur solche geeignet, die

1. bereits unter 122°C in einer Stunde bis zur Hälfte zerfallen und

2. den Verbindungsgruppen der aliphatischen Peroxiester, aliphatischen Diacylperoxide oder aliphatischen Azoverbindungen angehören.

Andere bekannte Radikalstarter sind überraschenderweise ungeeignet, da sie entweder zu träge reagieren, wie z. B. Di-t-Butylperoxid, t-Butyl-peroxi-benzoat, oder Verfärbungen und/oder unangenehme Gerüche und/oder zu hohe Restmonomeren -Gehalte von weit über 20 % ergeben, wie z. B. Kaliumpersulfat oder Dibenzoylperoxid etc.. Von den geeigneten Peroxiverbindungen sind aus praktischen Gründen diejenigen weniger bevorzugt, die bereits unter ca. 80°C in einer Stunde zur Hälfte zerfallen. Sie haben den Nachteil, daß sie wegen ihrer thermischen Empfindlichkeit z. B. schon nach der Herstellung mit Aliphaten verdünnt und bei Temperaturen unter 0°C transportiert bzw. gelagert werden müssen. Von solchen Peroxiverbindungen scien genannt:

Dimyristyl-peroxi-dicarbonat, Diisopropyl-peroxi-dicarbonat, t-Butyl-peroxineodecanoat, t-Amylperoxineodecanoat, t-Butylperpivalat, Bis-(3,5,5-trimethylhexanoyl-)peroxid.

Bevorzugt sind hingegen leicht handhabbare aliphstische Diacylperoxide oder Peroxiester, dic zwischen 80° und 122°C in einer Stunde höchstens zur Hälfte zerfallen, wie z. B. Didecanoylperoxid, Dilauroylperoxid, t-Butylperoxiisobutyrat, t-Butylperoxi-3,5,5-trimethyl-hexanoat, t-Butyl-peroxiacetat. Besonders bevorzugt ist t-Butyl-per-oxi-2-ethyl-hexanoat, das bei 92°C in einer Stunde zur Hälfte zerfällt. Es können auch Gemische der Katalysatoren verwendet werden.

Die notwondigen Gesamtmengen an Katalysatoren liegen bei 1 bis 5,5 %, bevorzugt 1,5 - 4 % und somit erheblich höher als in den Beispielen 3, 4 und 5 der DE-PS 1 106 963 angegeben ist. Wird weniger als 1,0 % Katalysator verwendet, so resultieren Restmonomerengehalte, die z. T. weit über 35 % liegen. Die notwendjgen Katalysatormengen sind umso niedriger, je-weniger Verdünnungsmittel zugeben ist.

Aus der DE-PS 1 106 963 geht hervor, daß zu Beginn der Polymerisation stets die gesamte Menge an Katalysator zugesetzt Werden muß. Dieses Vorgehen ist beim beanspruchten Verfahren nicht bevorzugt. Es führt bei den notwendigen hohen Monomerenkonzentrationen zu Beginn zu einer starhen exothermen Reaktion und insgesnmt zu relativ höheren Restmonomerengehalten. Es ist vielmehr bevorzugt, über mehrere Stunden hinweg eine möglichst gleichbleibende Konzentration an radikalabgobenden Molekülen aufrecht zu erhalten. Dies kann z. B. dadurch geschehen, daß, wenn die Reaktonstemperatur erreicht ist, zu Beginn der Polymerisation zunächst nur 0,1 - 1 %, bevorzugt 0,3 bis 0,8 % der Kstalysatoren zugefügt und während der Reaktion insgesamt noch weitere 0,9 - 5,4 %, bevorzugt 1,2 - 3,9 %, dcr Katalysatoren kontinuierlich oder verteilt auf 1 - 24, bevorzugt 2 - 12, gleiche Portionen in etwa gleichen Zeitabständen nachgegeben werden. Nach Ende der Katalysatorzugabe muß noch 1 bis 10, bevorzugt 2 - 6 Stunden, bei erhöhter Temperatur, zweckmäßigerweise der Reaktionstemperatur, nachgerührt werden.

Die Reaktionstemperaturen können zwischen 40°C und 130°C, bevorzugt 60° - 110°C liegen. Sie sind abhängig von der Zerfallshalbwertszeit des verwendeten Katalysators. Insbesondere geeignet sind Reaktionstemperaturen, die maximal ca. ± 25°C, besonders bevorzugt ± 0 bis 10°C, unterhalb bzw. oberhalb der Temperatur liegen, bei denen die Zerfallshalbwertszeit des verwendeten Katalysators eine Stunde beträgt.

Die geeigneten Reaktionszeiten sind in etwa umgekehrt proportial den Konzentrationen sn monomerer Vinylphosphonsäure, den Konzentrationen an Katalysatoren und den Reaktionstemperaturen, die für den verwendeten Katalysstor spezifisch sind. Sie liegen insgesamt, einschließlich der Nachrührzeit, zwischen 4 und 60 Stunden, bevorzugt zwischen 10 und 30 Stunden.

In den Endprodukten können die Gehalte an Polyvinylphosphonsäure bzw. an Rest-Vinylphosphonsäure durch $P^{31}$-NMR-Spek-troskopie exakt ermittelt werden. Auch Jodzahl-Bestimmungen geben Aufschluß über den Restmonomerengehalt. Die Vinkosität der erhaltenen Reaktionsprodukte liegt bei Verwendung von reiner Vinylphosphonsäure in 70 %iger wäßriger Lösung z. B. bei ca. 50 000 - 100 000 m Pas. Bei der Verwendung reiner Vinylphosphonsäure kann praktisch reine feste Polyvinylphosphonsäure durch Abziehen des Verdünnungsmittels im Vakuum sehr einfach erhslten werden. Es ist prinzipiell auch möglich, falls dies erwönscht ist, Polyvinylphosphonsäure, die ausgehend von "roher", bzw. von "esterhaltiger roher Vinylphosphonsäure" in protischen Verdünnungsmitteln erhalten wurde, durch Ausfällungen der Polymeranteile weitgehend zu reinigen.

Die erhaltenen Lösungen an Polyvinylphosphonsäure sind direkt, die daraus erhaltenen Festkörper sind indirekt, nach Auflösen in protischen Lösungsmitteln, wie bevorzugt z. B. Wasser, z. B. für den Korrosionsschutz, für den Textilflammschutz, für die Druckplattenherstellung, für die Verbesserung von Wasch- und Reinigungsmitteln etc., vielseitig verwendbar.

Die wesentlichen Unterschiede zwischen der vorliegenden Erfindung und der Gesamtlehre der 6E-PS 1 106 963 werden durch die folgenden Beispiele und Vergleichsbeispiele weiter erläutert.

Die in den Vergleichsbejspielen und in den Beispielen nur Polymerisation kommenden Arten von Vinylphosphonsäuren haben gemäß $P^{31}$-NMR-Spektren die unten angegebene Zusammensetzung. Die Prozentangaben beziehen sich auf Prozente Phosphor vom Gesamt-Phosphor. Sie stimmen mit den üblichen Gewichtsprozenten in etws überein, da die jeweiligen Molmassen der einzelnen vorhandenen Phosphorverbindungen nur relativ wenig von einander abweichen.

Hierbei bedeuten R bei den Säuren 2,3,4 H, bei dem Ester 5 H oder $CH_3$, beim Salz 6 H oder Na und X H oder $CH_3$.

| Säure-Nr. | Säure-Art |
|---|---|
| 1 | Reine Vinylphosphonsäure |
| 2 | Rohe Vinylphosphonsäure I |
| 3 | Rohe Vinylphosphonsäure II |
| 4 | Rohe Vinylphosphonsäure III |
| 5 | Esterhaltige rohe Vinylphosphonsäure |
| 6 | Mono-Natriumsalz der Vinylphosphonsäure |

| Säure-Art- Nr. | 1 | 2 | 3 | 4 | 5 | 6 |
|---|---|---|---|---|---|---|
| $CH_2=CH-P(O)(OH)_2$ | 100 | 74,5 | 76,2 | 72,9 | 30,8 | 0 |
| $CH_2=CH-P(O)(OH)(ONa)$ | 0 | 0 | 0 | 0 | 0 | 96,3 |
| $CH_2=CH-P(O)(OH)(OCH_3)$ | 0 | 0 | 0 | 0 | 26,6 | 0 |
| $CH_2=CH-P-(O)(OCH_3)_2$ | 0 | 0 | 0 | 0 | 4,9 | 0 |
| $CH_2=CH-P(O)(OH)OC_2H_4P(O)(OH)(OR)$ | 0 | 6,5 | 2,0 | 4,6 | 6,5 | 0 |
| $XO-C_2H_4P(O)(OH)(OR)$ | 0 | 4,8 | 2,6 | 7,7 | 13,4 | 0 |
| $RO-P(O)(OH)_2$ | 0 | 8,0 | 8,7 | 9,0 | 8,9 | 3,7 |
| Unbekannte P-Verbindungen | 0 | 5,5 | 10,5 | 7,8 | 0,1 | 0 |

## 1. Vergleichsbeispiele

Sie beschreiben ungeeignete Reaktionsbedingungen, wie vor allem ungeeignete Katalysatoren, zu geringe Katalysatormengen und/oder zuviel Verdünnungsmittel.

## 1.1. Vergleiohsbeispiele ausgehend von reiner Vinylphosphonsäure

### 1.1. Vergleichsbeispiel 1 (entspricht Beispiel 3 der

DE-PS 1 106 963):
50 g reine Vinylphosphonsäure werden in 50 g Isopropanol gelöst und zusammen mit 0,25 g wasserfeuchtem 75 %-igem Di-benzoylperoxid (= 0,38 % 100 %-ige Substanz) 5 Stunden auf 85 - 90°C erhitzt. Es resultiert eine Lösung, in der gemäß $P^{31}$-NMR-Spektrum noch 62,9 % des Phosphors als Vinylphosphonsäure und nur 35,9 % als Polyvinylphosphonsäure vorliegen.

### Vergleichsbeispiel 2:

Wird wie bei Vergleichsbeispiel 1, aber unter ständiger Stickstoffüberlagerung gearbeitet, so entfallen im Endproduht noch 77,6 % des Phosphors auf Vinylphosphonsäure und nur 20,6 % auf Polyvinylphosphonsäure.

### Vergleichsbeispiel 3: (entspricht Beispiel 4 der

DE-PS 1 106 963):
50 g reine Vinylphosphonsäure werden in 25 g Wasser gelöst und zusammen mit 0,25 g (= 0,5 %) Kaliumpersulfat 6 Std. suf 90°C gehalten. Es entsteht eine Lösung, in der gemäß $P^{31}$-NMR-Spektrum noch 93,8 % des Phosphors als Vinylphosphonsäure und nur 6,0 % sls Polyvinylphosphonsäure vorliegen.

### Vergleichsbeispiel 4:

Es wird wie in Vergleichsbeispiel 3, aber unter Stickstoff gearbeitet. Hierbei werden nur 2,4 % des Phosphors in Polyvinylphosphonsäure übergeführt.

**Vergleichsbeispiel 5:**

100 g reine Vinylphosphonsäure und 5 ml Wasser werden unter Stickstoff auf 80°C erhitzt und 0,3 g Ammoniumpersulfat zugefügt. Dann werden viermal nach jeweils drei Stunden nochmals je 0,3 g Ammoniumpersulfat zugesetzt, insgessmt also 1,5 %. Es wird noch 12 Stunden bei 80°C nachgerührt. Das P31-NMR-Spektrum ergibt, daß noch 84,5 % des Phosphors als Vinylphosphonsäure und nur 15,5 % als Polyvinylphosphonsäure zugegen sind.

**Vergleichsbeispiel 6:** (entspricht Beispiel 5 der

DE-PS 1 106 963):

32,5 g des Mono-Natriumsalzes der Vinylphosphonsäure werden, gelöst in 32,5 g Wasser, 5 Stunden lang bei 85°C zusammen mit 0,17g (= 0,5 %) Kaliumpersulfat erhitzt. Es entsteht eine Lösung, in der gemäß P31-NMR-Spektrum weniger als 10 % des Phosphors in Form von polymerem Natriumsalz vorliegen.
Gleiche Ergebnisse erhält msn, wenn der Reaktionsansatz ständig mit Stickstoff überlagert wird.

**Vergleichsbeispiel 7:**

100 g reine Vinylphosphonsäure und 5 ml Wasser werden unter Stickstoff auf 110°C erhitzt und nach 30 Minuten 0,4 ml t.-Butyl-peroxi-benzoat (Dichte bei 20°C = 1,03 (g/ml)) zugefügt. Dann werden 13 mal nach jeweils 2 Stunden nochmals je 0,2 ml des Katalysators nachgegeben, insgesamt also 3,1 % angewandt. Nach 4 Stunden Nachrühren werden 20 ml Wasser zugesetzt. Es entstehen 124,5 g einer braunen viskosen Lösung, in der gemäß P31-NMR-Spektrum noch 44,5 % Vinylphosphonsäure und nur 55,0 % Polyvinylphosphonsäure vorliegen.

**Vergleichsbeispiel 8:**

Es wird analog Vergleichsbeispiel 7 verfahren, aber statt insgesamt 3 ml des t.-Butyl-peroxi-benzoats 3 g von 75 %-igem Di-benzoylperoxid (= 2,25 %) verwendet und nur auf 80°C erhitzt. Es resultieren 123 g einer dunkelbraunen Lösung, in der nooh 67,9 % des Gesamt-Phosphors als Vinylphosphonsäure und nur 31,9 % als Polyvinylphosphonsäure vorhanden sind.

**Vergleichsbeispiel 9:**

50 g reine Vinylphosphonsäure und 5 ml Wasser werden unter Stickstoff auf 90°C erhitzt. Nach 30 Minuten werden 0,1 ml t.-Butyl-peroxi-2-ethyl-hexanoat (Dichte bei 20° = 0,89 (g/ml) und nach jeweils 2 Stunden 4 mal je 0,1 ml des Katalysators, inngesamt 0,5 m1 (= 0,9 %), zugegeben und noch 10 Stunden nachgerührt.
Gemäß P31-NMR-Spektrum liegen noch 40,2 % des Gesamt -Phosphors als Vinylphonphonsäure und nur 59,8 % als Polyvinylphosphonsäure vor.

**Vergleichsbeispiel 10:**

100 g reine Vinyl phosphonsäure und 50 ml Wasser werden unter Stickstoff suf 90°C erhitzt und nur zu Beginn 1,1 ml (= 1,0 %) t.-Butyl-2-ethyl-hexanoat zugegeben. Nach 7 Stunden Nachrühren bei 90°C sind noch 83,6 % des Vinyl-Phosphors unumgesezt.

7

**1.2. Vergleichsbeispiele mit roher Vinylphosphonsäure**

**Vergleichsbeispiel 11:**

40 g rohe Vinylphosphonsäure II und 5 ml Wasser werden unter Stickstoff auf 130°C erhitzt und 0,3 ml t.-Butylperoxid (Dichte bei 20° = 0,79 (g/ml)) zugesetzt. Dann wird auf 145°C erhitzt. Nach jeweils 2 Stunden werden viermal weitere je 0,2 ml Katslysator nachgegeben. Gesamt-Katalysatormenge = 2,2 %. Nach 4 Stunden Nachrühren bei 145°C wird bei 90°C mit 15 ml Wasser verdünnt. Gemäß P31-NMR-Spektrum liegen nur 38,1 % des Vinylphosphors als Polyvinylphosphonsäure vor.

**Vergleichsbeispiel 12:**

Wird wie in Vergleichsbeispiel 11 verfahren, aber insgesamt 1,1 ml (= 2,8 %) t.-Butyl-peroxi-benzoat als Katalysator verwendet und bei nur 130°C gearbeitet, so resultiert ein Produkt, in dem nur 49,0 % des Vinylphosphors als Polyvinylphosphonsäure gefunden werden.

**Vergleichsbeispiele 13, 14:**

Werden die Reaktionsbedingungen der Vergleichsbeispiele 5 und 8 übernommen, aber mit roher Vinylphosphonsäure II an Stelle von reiner Vinylphosphonsäure gearbeitet, so resultieren noch Prozentanteile an unumgesetztem Vinyl-Phosphor von 89,8 % bzw. 85,2 %.

**1.3. Vergleichsbeispiele mit esterhaltiger roher Vinylphosphonsäure**

**Vergleichsheispiel 15:**

40 g esterhaltige rohe Vinylphosphonsäure und 5 ml Wasser werden unter Stickstoff auf 100°C erhitzt und 0,3 ml t.-Butyl-peroxi-benzoat zugegeben. Es wird auf 130°C erhitzt und nsch 3 Stunden 0,3 ml Katalysator nachgegeben und nach weiteren 3 Stunden nochmals 0,3 ml (Gesamt-Katalysatormenge = 2,3 %). Es Wird 3 Stunden bei 130°C nachgerührt und bei 100°C 12 ml Wasser zugefügt. Die Reaktionslösung ist braun gefärbt. Sie enthält 59,8 % Polymeranteil und noch 40,2 % an nicht umgesetztem Vinylphosphor.

**Vergleichsbeispiel 16:**

Es wird wee bei Vergleichsbeispiel 15 vorgegangen. Es werden aber insgesamt 1,5 ml Di-t.-butyl-peroxid (= 3,0 %) eingesetzt und die Reaktionstemperatur bei 145°C gehalten. Im Endprodukt liegen noch 56,0 % des Vinyl-Phosphors unumgesetzt vor.

**Vergleichsbeispiel 17:**

Das Vorgleichsbeispiel 5 wird wiederholt und dabei anstelle der reinen die esterhaltige rohe Vinylphosphonsäure eingesetzt.
Es bleiben dabei noch 80,9 % an Vinylphosphor unumgesetzt.

**Vergleichsbeispiel 18:**

40 g esterhaltige rohe Vinylphosphonsäure werden unter Stickstoff auf 120°C erhitzt und 0,3 ml (= 0,7 %) t.-Butyl-peroxi-3,5,5-trimethyl-hexanoat zugegeben.
Nach 40 Minuten muß der Rührer wegen Viskositätserhöhung abgestellt werden. Das Reaktionsgemisch wird noch 3 Stunden ohne Rühren auf 120°C gehälten. Bei 90°C werden nach allmählichem Tiefersetzen des Rührers 15 ml Wßser eingerührt.
Die resultierende Lösung enthält noch 56,2 % unumgesetzten Vinyl-Phosphor.

**Vergleichsbeispiel 19:**

Wird Vergleichsbeispiel 18 mit der doppelten Henge an Katalysator (= 1,4 %) wiederholt, so bleiben noch 44,8 % des Vinyl-Phosphors unumgesetzt. Es treten ebenfalls Durchmischprobleme auf.

**2. Beispiele**

Sie beschreiben geeignete und beanspruchte Reaktionsbedingungen.

**2.1. Beispiele ausgehend von reiner Vinylphosphonsäure (VPS)**

**Beispiele 1 - 12**

Es werden generell t.-Butyl-pcroxi-2-ethyl-hexanoat (Dichte = 0,89 (g/ml)) als Katslysator und Wasser als Verdünnungsmittel verwendet.

| Biespiel-Nr. | 1 | 2 | 3 | 4 | 5 | 6 |
|---|---|---|---|---|---|---|
| Reine VPS (g) vorgelegt | 400 | 100 | 100 | 50 | 40 | 50 |
| Wasser während Reakt. insgesamt (g) | 160 | 35 | 50 | 35 | 15 | 20 |
| Wasser während Reakt. (Gew.-%/VPS) | 40 | 35 | 50 | 70 | 38 | 40 |
| Nur Wasser zu Beginn (g) | 40 | 5 | 50 | 35 | 15 | 10 |
| Nur n-malige weitere Wasserzugaben (g) | 3 x 40 | 3 x 10 | 0 | 0 | 0 | 1 x 10 |
| Nur Wasserzugabe Ende (g) | 0 | 20 | 0 | 0 | 15 | 0 |
| Katalysator insgesamt (ml) | 12,0 | 2,0 | 3,6 | 1,5 | 1,5 | 1,5 |
| Katal. insgesamt (Gew.-%/VPS) | 2,7 | 1,8 | 3,0 | 2,7 | 3,3 | 2,7 |
| Nur Katal. am Beginn (ml) | 1,0 | 0,4 | 1,0 | 0,3 | 0,3 | 0,3 |
| Nur m-malige weitere Katal.-Zugaben (ml) | 11 x 1,0 | 8 x 0,2 | 10 x 0,16 | 8 x 0,15 | 4 x 0,3 | 4 x 0,3 |
| Gewicht der Endlösung (g) | 563 | 149 | 141 | 82 | 65 | 70 |
| Gew.-% Festkörper | 71,0 | 67,1 | 70,9 | 61,0 | 61,5 | 71,4 |
| Stickstoff-Überlagerung | ja | ja | ja | ja | ja | ja |
| Reaktionstemperatur (C°) | 90 | 90 | 90 | 90 | 90 | 90 |
| Reaktionszeit bis Kataly. Ende (Std.) | 22 | 12 | 24 | 13 | 14 | 4 |
| Nachrührzeit (Std.) | 4 | 2 | 10 | 4 | 8 | 3 |
| % P aus unumgesetzter VPS im Endprod. | 1,5 | 2,0 | 1,12 | 18,3 | 0,8 | 3,8 |
| % P aus Plyvinylphosphonsäure im Endprod. | 97,8 | 97,7 | 97,8 | 81,0 | 98,6 | 95,7 |

| Biespiel-Nr. | 7 | 8 | 9 | 10 | 11 | 12 |
|---|---|---|---|---|---|---|
| Reine VPS (g) vorgelegt | 50 | 50 | 50 | 50 | 50 | 100 |
| Wasser während Reakt. insgesamt (g) | 20 | 20 | 20 | 50 | 25 | 40 |
| Wasser während Reakt. (Gew.-%/VPS) | 40 | 40 | 40 | 100 | 50 | 40 |
| Nur Wasser zu Beginn (g) | 20 | 20 | 10 | 50 | 25 | 10 |
| Nur n-malige weitere Wasserzugaben (g) | 0 | 1 x 10 | 1 x 10 | 0 | 0 | 6 x 5 |
| Nur Wasserzugabe Ende (g) | 0 | 0 | 5 | 0 | 0 | 20 |
| Katalysator insgesamt (ml) | 1,5 | 1,5 | 1,6 | 1,5 | 1,0 | 2,0 |
| Katal. insgesamt (Gew.-%/VPS) | 2,7 | 2,7 | 2,8 | 2,7 | 1,8 | 1,8 |
| Nur Katal. am Beginn (ml) | 1,5 | 1,5 | 0,2 | 0,3 | 0,7 | 0,4 |
| Nur m-malige weitere Katal.-Zugaben (ml) | 0 | 0 | 7 x 0,2 | 6 x 0,2 | 4 x 0,2 | 10 x 0,6 |
| Gewicht der Endlösung (g) | 70 | 79 | 75 | 96 | 73 | 158 |
| Gew.-% Festkörper | 71,4 | 63,3 | 66,7 | 52,1 | 68,5 | 63,3 |
| Stickstoff-Überlagerung | ja | ja | nein | ja | ja | ja |
| Reaktionstemperatur (C°) | 90 | 90 | 90 | 90 | 90 | 90 |
| Reaktionszeit bis Kataly. Ende (Std.) | 0,5 | 0,5 | 13 | 10 | 8 | 11 |
| Nachrührzeit (Std.) | 4,5 | 8,5 | 4 | 13 | 5 | 1 |
| % P aus unumgesetzter VPS im Endprod. | 11,9 | 9,0 | 10,6 | 25,7 | 23,9 | 3,8 |
| % P aus Plyvinylphosphonsäure im Endprod. | 87,5 | 90,4 | 88,7 | 73,6 | 75,7 | 95,9 |

Ohne Stickstoffüberlagerung (Beispiel 9) tritt während der Reaktion eine deutliche Braunfärbung auf. Wird wie beim Beispiel 1 gearbeitet, der Katalysator aber kontinuierlich zugetropft, so resultiert ein ähnliches Reaktionsgemisch.

**Beispiele 13 - 18:**

Hierbei verwendete Katalysatoren:

| | | Dichten (g/ml) bei 20°C |
|---|---|---|
| I | = t.-Butyl-peroxi-3,5,5-trimethyl-hexanoat | 0,89 |
| II | = t.-Butyl-peroxi-pivalat (75 %-ig in Aliphaten) | 0,86 |
| III | = t.-Butyl-peroxi-iso-decanoat (75 %-ig in Aliphaten) | 0,86 |
| IV | = Di-isopropyl-peroxi-dicarbonat (40 %-ig in Phthalat) | 1,06 |
| V | = Lauroylperoxid | - |
| VI | = Azo-bis-(isobutyronitril) | - |

In allen Fällen wurde in Wasser gearbeitet und mit Stickstoff überlagert.

| Biespiel-Nr. | 13 | 14 | 15 | 16 | 17 | 18 |
|---|---|---|---|---|---|---|
| Reine VPS (g) vorgelegt | 100 | 40 | 100 | 100 | 100 | 100 |
| Wasser während Reakt. insgesamt (g) | 50 | 10 | 35 | 45 | 45 | 45 |
| Wasser während Reakt. (Gew.-%/VPS) | 50 | 25 | 35 | 45 | 45 | 45 |
| Nur Wasser zu Beginn (g) | 50 | 10 | 5 | 5 | 5 | 5 |
| Nur n-malige weitere Wasserzugaben (g) | 0 | 0 | 3 x 10 | 4 x 10 | 4 x 10 | 4 x 10 |
| Nur Wasserzugabe Ende (g) | 20 | 21 | 10 | 10 | 20 | 10 |
| Katalysator insgesamt (ml) | I | I | II | III | IV | V |
| Katal. insgesamt (Gew.-%/VPS) | 3,6 | 1,2 | 4,0 | 4,0 | 7,5 | 2 g |
| Nur Katal. am Beginn (ml) | 3,2 | 2,7 | 2,6 | 2,6 | 2,6 | 2,0 |
| Nur m-malige weitere Katal.-Zugaben (ml) | 0,4 | 0,4 | 0,4 | 0,4 | 1,0 | 0,4 g |
| Gewicht der Endlösung (g) | 8 x 0,4 | 2 x 0,4 | 13 x 0,28 | 9 x 0,4 | 10 x 0,65 | 8 x 0,2 |
| Gew.-% Festkörper | 158 | 71 | 140 | 149,5 | 166,5 | 149 |
| Stickstoff-Überlagerung | 63,3 | 56,3 | 71,4 | 66,9 | 60,1 | 67,1 |
| Reaktionstemperatur (C°) | 98 | 101 | 80 | 70 | 62 | 80 |
| Reaktionszeit bis Kataly. Ende (Std.) | 38 | 6 | 22 | 15 | 19 | 13 |
| Nachrührzeit (Std.) | 5 | 10 | 5 | 8 | 2 | 5 |
| % P aus unumgesetzter VPS im Endprod. | 1,6 | 0,6 | 19,1 | 10,6 | 1,7 | 3,8 |
| % P aus Plyvinylphosphonsäure im Endprod. | 96,8 | 98,1 | 80,9 | 89,2 | 98,1 | 96,0 |

**Beispiel 19:**

32,5 g (0,25 Mol) Mono-Natriumsalz der Vinylphosphonsäure und 15 ml Wasser werden unter Stickstoff auf 90°C erhitzt und 0,2 ml t.-Butyl-peroxi-2-ethyl-hexanoat zugesetzt. Nach je 2 Stunden werden siebehmal weitere je 0,2 ml nachgegeben. Gesamt-Katalysatormenge = 1,6 mit (= 4,4 %). 10 Stunden nach Beginn der Katalysatorzugabe wird mit 10 ml Wasser verdünnt. Es werden 5 Stunden bei 90°C nachgerührt und nochmals 10 ml Wßser zugegeben. Es resultieren 66 g einer Lösung, in der nur noch 10,1 % des Gesamt-Phosphors als Vinylphosphonsäures Natrium vorliegen.

**Beispiel 20:**

100 g Vinylphosphonsäure und 50 g Methanol werden unter Stickstoff auf 60°C erhitzt. Es werden zu Beginn 1 ml der 40 %-igen Lösung von Diisopropyl-peroxi-dicarbonat in Phtalat zugesetzt und 13 mal nach je zwei Stunden weitere 0,5 ml des Katalysators nachgegeben. Gesamt-Katalysatormenge = 3,2 %.
Dann wird drei Stunden bei 0°C nachgerührt und mit 20 g Methanol verdünnt. Es resultieren 168,4 g einer Lösung, in der nur noch 11,3 % des Gesamt-Phosphors als Vinylphosphonsäure vorliegen.

**Beispiel 21:**

50 g reine Vinylphosphonsäure und 10 Isopropanol werden unter Stickstoff auf 80 - 85°C erhitzt und 0,2 ml t.-Butyl -peroxi-2-ethyl-hexanoat zugefügt. Nach je zwei weiteren Stunden werden noch 7 mal je 0,2 ml des Katalysators nachgegeben. Gesamt-Katalysatormenge: 1,6 ml (= 2,8 %). Zwischendurch muß noch dreimal mit je 10 g Isopropanol verdünnt werden.

Es wird 4 Stunden bei 80 - 85°C nacherhitzt. Am Schluß wird nochmals mit 30 g Isoproanol verdünnt. Es resultieren 118 g einer Lösung in der nur noch 5,0 % des Gesamt-Phosphors als Vinylphosphonsäure und 94,7 % als Polyvinylphosphonsäure zugegeben sind.

**2.2. Beispiele ausgehend von roher Vinylphosphorsäure**

**Beispiel 22:**

100 g 5 % Wasser enthaltender roher Vinylphosphonsäure I werden unter Stickstoff auf 90°C erhitzt und 0,4 ml t.-Butyl-2-ethyl-hexanoat zugefügt. Nach je zwei Stunden werden weitere je 0,2 ml nachgegeben. Gesamt-Katalysatormenge:

3 ml (= 2,7 %).- Es muß zwischendurch zweimal mit je 10 ml Wasser verdünnt werden. Es resultieren 126 g einer Lösung, in der gemäß P$^{31}$-NMR-Spektrum nur noch 1,8 % des Vinyl-Phosphors unumgesetzt vorliegen.

**Beispiel 23:**

Wird wie im Beispiel 22 gearbeitet, aber zwischendurch nicht mit Wasser sondern mit 2 x 10 g Methanol verdünnt und bei 80°C weitergerührt, so resultieren 118 g einer Lösung, in der nur noch 9,6 % des Vinylphosphors unumgesetzt sind.

**Beispiel 24:**

400 g 5 % Wasser enthaltender roher Vinylphosphonsäure III und 40 ml Wasser werden unter Stickstoff auf 90°C erhitzt und zunächst nur 1 ml t-Butyl-peroxi-2-ethyl -hexanoat zugefügt. Nach je zwei weiteren Stundcn wird elfmal wieder je 1 ml Katalysator nachgegeben. Gesamt -Katalysstormenge: 12 ml (= 2,7 %). Zwischendurch mu mit zweimal 20 ml Wasser verdünnt werden. Ausbeute 481,4 g. Nur noch 2,9 % des Vinyl-Phosphors haben nicht reagiert.

**Beispiel 25:**

100 g entwässerter roher Vinylphosphonsäure I und 20 g Isobutanol werden unter Stickstoff auf 90°C erhitzt. Es werden zu Beginn nur 0,4 ml t-Butyl-peroxi-2-ethyl -hexanoat zugesetzt und zwölfmal in je zwei Stunden weitere je 0,3 ml Katalysator nachgegeben. (Gesamtmenge: 4 ml = 3,6 %). Es muß zwischendurch zweimal mit je 10 g Isobutanol verdünnt werden. Es Wird 2 Stunden bei 90°C nachgerührt und vor dem Abkühlen nochmals mit 15 g Isobutanol verdünnt. Ausbeute: 152 g einer Lösung, in der nur noch 10,3 % des Vinylphosphors unpolymerisiert geblieben sind.

**2.3 Beispiele ausgehend von esterhaltiger roher Vinylphosphonsäure**

**Beispiel 26:**

100 g esterhaltige rohe Vinylphosphonsäure und 7 ml Wasser werden unter Stickstoff auf 90°C erhitzt und 0,5 ml t-Butyl-peroxi-2-ethyl-hexanoat zugefügt. Nach je 2 Stunden werden 10 mal je weitere 0,25 ml Katalysator zugesetzt. Gessmtmenge: 3 ml (= 2,7 %). Es muß zwischendurch einmal mit 10 ml Wasser verdünnt werden. Es wird 4 Stunden bei 90°C nachgerührt und vor dem Abkühlen mit weiteren 15 ml Wasser verdünnt. Ausbeute: 130 g:einer Lösung, in der nur noch 5,5 % des Vinylphosphors nicht polymerisiert sind.

**Beispiel 27:**

100 g esterhaltige rohe Vinylphosphonsäure und 20 g Isobutanol werden unter Stickstoff auf 90°C erhitzt. Es werden zu Beginn nur 0,4 ml t.-Butyl-peroxi-2 -ethyl-hexanoat zugefügt, dann zehnmal in je zwei Stunden jeweils 0,3 ml und nach weiteren zwei Stunden schließlich nochmals 0,6 ml des Katalysators nachgegeben. Gesamt-Katalysatormenge: 4 ml (= 3,6 %). Zwischendurch muß mit zweimal je 10 g Isobutanol verdünnt werden, damit die Rührfähigkeit gewährt bleibt. Nach der Katalysatorzugabe wird noch 90 Minuten bei 90°C nachgerührt. Vor dem Abkühlen wird nochmals mit 25 g Isobutanol verdünnt. Es resultieren 158 g einer Lösung, in der nur noch 12,0 % des Vinylphosphors nicht polymerisiert sind.

**Beispiel 28:**

100 g esterhaltige rohe Vinylphosphonsäure werden unter Stickstoff auf 90°C erhitzt. Es werden zunächst 0,4 ml t.-Butyl-peroxi-2-ethyl-hexanoat und 10 mal nach je zwei Stunden jc 0,26 ml zugegeben.
Gesamtmenge: 3 ml (= 2,7 %). Zwischenzeitlich wird dreimal mit je 10 g Methanol verdünnt. Nach drei Stunden Nachrühren bei 90°C werden nochmals 10 g Methanol zugesetzt. Ausbeute: 135 g. In der Lösung liegen nur noch 16,8 % unumgesetzter Vinylphosphor vor.

**Patentansprüche**

1. Verfahren zur Herstellung von Polymerisaten der Vinylphosphonsäure in protischen Verdünnungsmitteln mit Hilfe von radikalbildenden Katalysatoren, dadurch gekennzeichnet, daß man Vinylphosphonsäure in insgesamt 10 bis 150 Gew.-% an protischcn Verdünnungsmitteln insgesamt 4 - 60 Stunden auf Temperaturen von 40° bis 130°C erhitzt in Gegenwart von 1,0 bis 5,5 Gew.-% an solchen aliphatischen Perosidestern und/oder Diacylperoxiden die bei Temperaturen unter 122°C in einer Stunde zur Hälfte zerfallen.

2. Verfahren nach Anspruch 1, dadurch gekennzeichnet, daß man zu Beginn der Reaktion nur 0,1 bis 1 Gew.-% der Gesamtmenge des Katalysators und im Verlauf der Reaktion gleichmäßig weitere 0,9 bis 5,4 Gew.-% des Katalysators zugibt.

3. Verfahren nach Anspruch 1, dadurch gekennzeichnet, daß man in Gegenwart von aliphatischen Peroxidestern oder Diacylperoxiden arbeitet, die zwischen 80C und 122°C in einer Stunde zur Hälfte zerfallen.

4. Verfahren nach Anspruch 1, dadurch gekennzeichnet, daß man Vinylphosphonsäure polymerisiert, die bis zu 30 Gew.-% an Phosphonsäuren und Phosphorsäure bzw. die Monomethylester dieser Säuren enthält.

**Claims**

1. A process for the preparation of a polymer of vinylphosphonic acid in a protic diluent with the aid of a catalyst which forms free radicals, which comprises heating vinylphosphonic acid at temperatures of 40° to 130°C in a total of 10 to 150 % by weight of a protic diluent for a total of 4 - 60 hours in the presence of 1.0 to 5.5 % by weight of an aliphatic peroxy-ester and/or diacyl peroxide which decompose by half in one hour at temperatures below 122°C.

2. The process as claimed in claim 1, wherein only 0.1 to 1 % by weight of the total amount of catalyst is added at the start of the reaction and a further 0.9 to 5.4 % by weight of the catalyst is added uniformly in the course of the reaction.

3. The process as claimed in claim 1, wherein the reaction is carried out in the presence of an aliphatic peroxy-ester or diacyl peroxide which dissociates by half between 80°C and 122°C within one hour.

4. The process as claimed in claim 1, wherein vinylphosphonic acid which contains up to 30 % by weight of phosphonic acids and phosphoric acid or the monomethyl esters of these acids is polymerized.

**Revendications**

1. Procédé pour préparer des polymères de l'acide vinyl-phosphonique dans des diluants protiques, au moyen de catalyseurs générateurs de radicaux, procédé caractérisé en ce qu'on chauffe l'acide vinyl-phosphonique dans 10 à 150 % en poids, au total, de diluants protiques, pendant une durée totale de 4 à 60 heures, à des températures de 40 à 130°C, en présence de 1,0 à 5,5 % en poids de peroxy-esters aliphatiques et/ou de peroxydes de diacyles qui se décomposent à moitié en 1 heure à des températures inférieures à 122°C.

2. Procédé selon la revendication 1 caractérisé en ce qu'au début de la réaction on n'ajoute que de 0,1 à 1 %

**EP 0 114 394 B1**

en poids de la quantité totale du catalyseur et en ce qu'au cours de la réaction on ajoute régulièrement de 0,9 à 5,4 % en poids supplémentaires du catalyseur.

3. Procédé selon la revendication 1 caractérisé en ce qu'on opère en présence de peroxy-esters aliphatiques ou de peroxydes de diacyles qui se décomposent à moitié en 1 heure entre 80 et 122°C.

4. Procédé selon la revendication 1, caractérisé en ce qu'on polymérise un acide vinyl-phosphonique qui contient au plus 30 % en poids d'acides phosphoniques et d'acide phosphorique, ou des esters monométhyliques de ces acides.

13